# EUROPEAN PATENT SPECIFICATION

(11) **EP 3 657 327 B1**
(45) Date of publication and mention of the grant of the patent: **04.01.2023**
(21) Application number: 18834397.4
(22) Date of filing: 17.07.2018
(51) Int. Cl.: G06F 9/445, G06T 11/00, G06T 15/00, A63F 13/52, G06T 15/04, G06T 11/40

(54) **METHOD FOR RENDERING GAME, AND METHOD, APPARATUS AND DEVICE FOR GENERATING GAME RESOURCE FILE**
VERFAHREN ZUR DARSTELLUNG EINES SPIELS UND VERFAHREN, GERÄT UND VORRICHTUNG ZUR ERZEUGUNG EINER SPIELRESSOURCENDATEI
PROCÉDÉ DE RENDU DE JEU, AINSI QUE PROCÉDÉ, APPAREIL ET DISPOSITIF POUR GÉNÉRER UN FICHIER DE RESSOURCE DE JEU

(30) Priority: 21.07.2017 CN 201710600237
(43) Date of publication of application: 27.05.2020
(73) Proprietor: Tencent Technology (Shenzhen) Company Limited, Shenzhen, Guangdong 518057 (CN)
(72) Inventor: XU, Minjun, GUANGDONG 518057 (CN)
(74) Representative: Eisenführ Speiser
(86) International application number: PCT/CN2018/096002
(87) International publication number: WO 2019/015591

(56) References cited:
- CN-A- 101 364 310
- CN-A- 101 840 566
- CN-A- 105 931 180
- CN-A- 105 957 133
- CN-A- 107 463 398
- US-A1- 2014 267 346
- US-A1- 2016 048 980
- US-B1- 6 587 104
- LIU, HAO: "Non-official translation: Research on Key Techniques of Multi-scale 3D Disaster Scene Construction and Dynamic Plotting", Doctoral Dissertation, 15 November 2013 (2013-11-15), pages 1-139, XP009518303, ISSN: 1674-022X

## Description

This application claims priority to Chinese Patent Application No. 201710600237.7, entitled "METHOD AND APPARATUS FOR RENDERING GAME, STORAGE DEVICE AND TERMINAL" filed with Chinese Patent Office on July 21, 2017.

### FIELD

The present disclosure relates to the field of Internet technologies, specifically to the field of Internet game technologies, and in particular to a game rendering method, a game resource file generation method, a game rendering apparatus, a game resource file generation apparatus, a storage device, and a terminal.

### BACKGROUND

In a conventional game rendering method, all texture maps (for example, a scenery, a character, and a user interface (Ul)) that may be required in a current running scene of a game are generally pre-loaded into a memory. In a case that one of the texture maps needs to be rendered, the texture map is directly obtained from the memory. However, many of the texture maps are actually not in use always. In the case that the texture maps are loaded into the memory, loading overhead is increased, and memory occupation is increased, resulting in stalling of the game. Another game rendering method further exists in the conventional technology, by which the memory burden can be reduced to some extent. In the latter method, a texture merging tool such as a texture packer is used to merge multiple small texture maps into one large texture map in a resource packing process. The large texture map is loaded into the memory only in a case that multiple game elements (for example, a scenery, a character) need to be rendered, thereby saving the loading overhead. When rendering the multiple game elements, the elements can be merged into a rendering batch, provided that the elements use the same large texture map and rendering parameters thereof are the same, thereby improving the rendering performance. Although the rendering performance can be improved with the method using the texture merging tool, the entire large texture map needs to be loaded into the memory. Due to the large texture reuse during running of the game, the method also results in large unnecessary memory overhead. Moreover, the memory burden is significantly increased with version update and content increase of the game, resulting in stalling of the game.

US2014/267346A1 provides a method for generating textured graphics includes identifying border colors of pixels around two texture images and generating arrangements of border texels from the border colors that are positioned next to the two images in a texture atlas. The method includes generating mip-maps of the texture atlas with texels in the jump level assigned with the border color of the corresponding textures in the full-resolution texture atlas instead of the averaged color of the textures that would be assigned using a traditional mip-map process.

US2016/048980A1 discloses a method of providing a solid texture map to a graphics processing unit (GPU), which includes dividing a tile of renderable content into a plurality of partitions, determining that a set of partitions of the plurality of partitions is a solid color, generating a solid texture map indicating that the set of partitions of the plurality of partitions is a solid color, and providing access to the solid texture map to a GPU.

### SUMMARY

There are provided a game rendering method, a game resource file generation method and apparatus, a storage device, and a terminal according to embodiments of the present disclosure, by which the picture effect of rendering can be ensured, and the memory burden can be prevented from linearly increasing with running of a game, thereby ensuring that the game runs smoothly.

In an aspect, a game rendering method is provided according to an embodiment of the present disclosure. The game rendering method includes:
obtaining a resource file of a game, the resource file including one or more texture maps required by rendering of the game, each of the texture maps being formed by merging multiple fragmented textures;
determining a target texture map used by a to-be-rendered mesh in a current running scene of the game;
searching the resource file for fragmented textures corresponding to the target texture map; and
merging and rendering the fragmented textures corresponding to the target texture map;
where before the obtaining a resource file of a game, the method further includes:
   obtaining one or more texture maps required by rendering of the game, the texture maps each including original texture data;
   fragmenting each of the texture maps into multiple fragmented textures, each of the fragmented textures including one piece of fragmented texture data and marginal original texture data of a preset width surrounding the fragmented texture data;
   encapsulating the fragmented textures corresponding to the texture map into the resource file;
   where the fragmenting each of the texture maps into multiple fragmented textures includes:
      selecting each of the texture maps in turn, and cutting the selected texture map in rows into multiple rectangular frames according to a first preset specification;
      fragmenting original texture data included in the selected texture map into multiple pieces of fragmented texture data according to a second preset specification, and obtaining marginal original texture data of a preset width around each of the pieces of fragmented texture data; and
      filling corresponding rectangular frames with the multiple pieces of fragmented texture data and marginal original texture data of the preset width of the multiple pieces of fragmented texture data, to form one of the fragmented textures by each of the filled rectangular frames, where
      a value of the first preset specification is greater than or equal to a sum of a value of the second preset specification and a value of twice the preset width.

Preferably, the filling corresponding rectangular frames with the multiple pieces of fragmented texture data and marginal original texture data of the preset width of the multiple pieces of fragmented texture data, to form one of the fragmented textures by each of the filled rectangular frames includes:
reserving a margin of the preset width on each of an upper side and a lower side of each of the rectangular frames, and adding the margin of the preset width on each of a left side and right side of the rectangular frame, so that the rectangular frame has a central region and a marginal region surrounding the central region; and
filling central regions of the corresponding rectangular frames respectively with the multiple pieces of fragmented texture data, and filling marginal regions of the corresponding rectangular frames respectively with the marginal original texture data of the preset width surrounding the multiple pieces of fragmented texture data, to form one of the fragmented textures by each of the filled rectangular frames.

Preferably, the encapsulating, for each of the texture maps, the fragmented textures corresponding to the texture map into the resource file includes:
obtaining, for each of the texture maps, an attribute of the texture map, the attribute including an identity (ID), a release type, and offset information, the release type including immediate release, automatic release, or being resident in a memory;
generating a brief information table based on attributes of the texture maps; and
storing the brief information table into a file header of the resource file, and storing the fragmented textures corresponding to each of the texture maps into a file body of the resource file.

Preferably, the merging and rendering the fragmented textures corresponding to the target texture map includes:
cutting a preset dynamic loading region in a memory in rows into multiple dynamic loading rows according to a first preset specification;
allocating, for each of the dynamic loading rows, an idle region of the dynamic loading row by using a bin-packing algorithm;
loading the fragmented textures corresponding to the target texture map in turn into idle regions of the dynamic loading rows; and
reading the loaded fragmented textures from the dynamic loading rows and submitting the read fragmented textures to a rendering engine of the game to be rendered.

Preferably, after the merging and rendering the fragmented textures corresponding to the target texture map, the method further includes:
obtaining a release type of the target texture map from the file header of the resource file;
releasing the dynamic loading rows occupied by the fragmented textures of the target texture map according to the obtained release type; and
merging the recycled dynamic loading rows.

In another aspect, a game resource file generation method is provided according to an embodiment of the present disclosure. The game resource file generation method includes:
obtaining one or more texture maps required by game rendering, the texture map including original texture data;
performing fragmentation processing separately on each texture map to obtain multiple fragmented textures; and
encapsulating the fragmented textures corresponding to each texture map into the resource file of the game;
where the fragmenting each of the texture maps into a plurality of fragmented textures includes:
   selecting each of the texture maps in turn, and cutting the selected texture map in rows into a plurality of rectangular frames according to a first preset specification;
   fragmenting original texture data comprised in the selected texture map into a plurality of pieces of fragmented texture data according to a second preset specification, and obtaining marginal original texture data of a preset width around each of the pieces of fragmented texture data; and
   filling corresponding rectangular frames with the plurality of pieces of fragmented texture data and marginal original texture data of the preset width of the plurality of pieces of fragmented texture data, to form one of the fragmented textures by each of the filled rectangular frames, where
   a value of the first preset specification is greater than or equal to a sum of a value of the second preset specification and a value of twice the preset width.

According to another aspect, an embodiment of the present disclosure provides a game rendering apparatus, including:
a file obtaining unit, configured to obtain a resource file of a game, the resource file including one or more texture maps required by rendering of the game, each of the texture maps being formed by merging multiple fragmented textures;
a target determining unit, configured to determine a target texture map used by a to-be-rendered mesh in a current running scene of the game;
a search unit, configured to search the resource file for fragmented textures corresponding to the target texture map;
a merging and rendering unit, configured to merge and render the fragmented textures corresponding to the target texture map; and
a resource packing processing unit, configured to: obtain the one or more texture maps required by the rendering of the game, the texture maps each including original texture data; fragmenting each of the texture maps into multiple fragmented textures, each of the fragmented textures including one piece of fragmented texture data and marginal original texture data of a preset width surrounding the fragmented texture data; and encapsulate the multiple fragmented textures corresponding to the texture map into the resource file;
where the resource packing processing unit is configured to: select each of the texture maps in turn, and cut the selected texture map in rows into a plurality of rectangular frames according to a first preset specification; fragment original texture data comprised in the selected texture map into a plurality of pieces of fragmented texture data according to a second preset specification, and obtain marginal original texture data of a preset width around each of the pieces of fragmented texture data; and fill corresponding rectangular frames with the plurality of pieces of fragmented texture data and marginal original texture data of the preset width of the plurality of pieces of fragmented texture data, to form one of the fragmented textures by each of the filled rectangular frames, wherein a value of the first preset specification is greater than or equal to a sum of a value of the second preset specification and a value of twice the preset width.

Preferably, the game rendering apparatus further includes:
a recycling processing unit, configured to: obtain a release type of the target texture map from a file header of the resource file; release dynamic loading rows occupied by the fragmented textures of the target texture map according to the obtained release type; and merge the recycled dynamic loading rows.

Preferably, the resource packing processing unit is configured to fill corresponding rectangular frames with the multiple pieces of fragmented texture data and the marginal original texture data of the preset width of the multiple pieces of fragmented texture data, to form one of the fragmented textures by each of the filled rectangular frames by: reserving a margin of the preset width on each of an upper side and a lower side of each of the rectangular frames, and adding the margin of the preset width on each of a left side and right side of the rectangular frame, so that the rectangular frame has a central region and a marginal region surrounding the central region; and filling central regions of the corresponding rectangular frames respectively with the multiple pieces of fragmented texture data, and filling marginal regions of the corresponding rectangular frames respectively with the marginal original texture data of the preset width surrounding the multiple pieces of fragmented texture data, to form one of the fragmented textures by each of the filled rectangular frames; and
the resource packing processing unit is configured to: obtain, for each of the texture maps, an attribute of the texture map, the attribute including an ID, a release type, and offset information, the release type including immediate release, automatic release, or being resident in a memory; generate a brief information table based on attributes of the texture maps; and store the brief information table into the file header of the resource file, and store the multiple fragmented textures corresponding to each of the texture maps into a file body of the resource file.

Preferably, the merging and rendering unit is configured to: cut a preset dynamic loading region in a memory in rows into multiple dynamic loading rows according to a first preset specification; allocate, for each of the dynamic loading rows, an idle region of the dynamic loading row by using a bin-packing algorithm; load the fragmented textures corresponding to the target texture map in turn into idle regions of the dynamic loading rows; and read the loaded fragmented textures from the dynamic loading rows and submit the read fragmented textures to a rendering engine of the game to be rendered.

In another aspect, a game resource file generation apparatus is provided according to an embodiment of the present disclosure. The game resource file generation apparatus includes:
a map obtaining unit, configured to obtain one or more texture maps required by rendering of a game, the texture maps each including original texture data;
a fragmentation unit, configured to fragment each of the texture maps into multiple fragmented textures; and
a file encapsulation unit, configured to encapsulate the fragmented textures corresponding to the texture map into a resource file of the game,
where the fragmentation unit is configured to:
   select each of the texture maps in turn, and cutting the selected texture map in rows into a plurality of rectangular frames according to a first preset specification;
   fragment original texture data comprised in the selected texture map into a plurality of pieces of fragmented texture data according to a second preset specification, and obtain marginal original texture data of a preset width around each of the pieces of fragmented texture data; and
   fill corresponding rectangular frames with the plurality of pieces of fragmented texture data and marginal original texture data of the preset width of the plurality of pieces of fragmented texture data, to form one of the fragmented textures by each of the filled rectangular frames, where
   a value of the first preset specification is greater than or equal to a sum of a value of the second preset specification and a value of twice the preset width.

In another aspect, a storage device is further provided according to an embodiment of the present disclosure. The storage device stores one or more instructions. The one or more instructions are loaded by a processor to implement the game rendering method according to the embodiments of the present disclosure, or the game resource file generation method according to the embodiment of the present disclosure.

In another aspect, a terminal is further provided according to an embodiment of the present disclosure. The terminal includes:
a processor, configured to execute one or more instructions; and
a storage device storing the one or more instructions, where the one or more instructions are loaded by the processor to implement the game rendering method according to the embodiments of the present disclosure, or the game resource file generation method according to the embodiment of the present disclosure.

According to the embodiments of the present disclosure, in a resource packing process, a texture map is fragmented into multiple fragmented textures, and the fragmented textures corresponding to a used target texture map are loaded according to a requirement of game rendering, so that the memory loading overhead can be effectively reduced, and the memory burden can be reduced. Moreover, the fragmented textures corresponding to the target texture map are merged and rendered, so that the picture effect of rendering can be ensured, and the memory burden can be prevented from linearly increasing with running of a game, thereby ensuring that the game runs smoothly.

### BRIEF DESCRIPTION OF THE DRAWINGS

To describe the technical solutions in the embodiments of the present disclosure or in the conventional technology more clearly, the accompanying drawings used for describing the embodiments or the conventional technology are briefly introduced in the following. Apparently, the accompanying drawings in the following description show merely some embodiments of the present disclosure, and a person of ordinary skill in the art may still derive other drawings from the accompanying drawings without creative efforts.
FIG. 1 is a flowchart of a game rendering method according to an embodiment of the present disclosure.
FIG. 2 is a flowchart of a game resource file generation method according to an embodiment of the present disclosure.
FIG. 3a to FIG. 3c are schematic diagrams showing a process of fragmentation processing according to an embodiment of the present disclosure.
FIG. 4 is a schematic diagram showing a picture effect of merging and rendering according to an embodiment of the present disclosure.
FIG. 5 is a schematic structural diagram of a game rendering apparatus according to an embodiment of the present disclosure.
FIG. 6 is a schematic structural diagram of a terminal according to an embodiment of the present disclosure.

### DETAILED DESCRIPTION OF THE EMBODIMENTS

The technical solutions in the embodiments of the present disclosure are clearly and completely described in the following with reference to the accompanying drawings in the embodiments of the present disclosure.

Game rendering refers to a series of processing processes in which scenes of a game are drawn by using a computer, including processes such as spatial illumination calculation, rasterization and clipping, texture sampling, depth detection, and alpha blending. The game rendering needs a variety of resources, including animation, texture maps, and the like. The texture map refers to a map file used in a running scene of a game. The scene of the game looks real with the texture map. The texture map has a variety of different formats and is used in a variety of application scenarios. For example, the texture map may be a 3-dimension (3D) texture map affixed to a 3D model or used for UI interaction in stereoscopic space, or may also be a 2D texture map affixed to a 2D plane or used for UI interaction on a plane. The texture sampling generally includes nearest point sampling and linear sampling. The nearest point sampling is a process in which original texture data included in a texture map is sampled according to pixel coordinates of the texture map to find the nearest original texture data, and a pixel of the nearest original texture data is used as a color value of the texture map. The linear sampling is a process in which, after the nearest original texture data is found, multiple pieces of data are still sampled around the original texture data and a pixel average of the sampled pieces of data is calculated as a color value of the texture map.

Generally, the resources such as the texture maps used in the game rendering are generated by art designing in a process of game development. The generated original resources cannot be directly used in an application program of the game, but are used only after some processes are performed, including binarization, encryption, compression, and the like. The processes are collectively called a resource packing process. A file obtained after the processes are performed is a resource file of the game. The resource file includes resources such as animation and texture maps required by the game rendering, and the resources in the resource file can be directly applied to the game.

In a conventional game rendering method, all texture maps (for example, a scenery, a character, and a UI) that may be required in a current running scene of a game are generally pre-loaded into a memory. In a case that one of the texture maps needs to be rendered, the texture map is directly obtained from the memory. However, many of the texture maps are actually not in use always. For example, a weapon in the scene may not appear at the beginning of the game, and thus does not need to be rendered at the beginning. In the case that the weapon is loaded into the memory, loading overhead is increased, and memory occupation is increased, resulting in stalling of the game. Another game rendering method further exists in the conventional technology, by which the memory burden can be reduced to some extent. In the latter method, a texture merging tool (for example, a texture packer) is used. The texture packer is used to merge multiple small texture maps into one large texture map in a resource packing process. The large texture map is loaded into the memory only in a case that the multiple game elements (for example, a scenery, a character) need to be rendered, thereby saving the loading overhead. When rendering the multiple game elements, the elements can be merged into a rendering batch, provided that the elements use the same large texture map and rendering parameters thereof are the same, thereby improving the rendering performance. Although the rendering performance can be improved with the method using the texture merging tool, the entire large texture map needs to be loaded into the memory. Due to the large texture reuse during running of the game, the method also results in large unnecessary memory overhead. Moreover, the memory burden is significantly increased with version update and content increase of the game, resulting in stalling of the game.

According to the embodiments of the present disclosure, in a resource packing process, a texture map is fragmented into multiple fragmented textures, and the fragmented textures corresponding to a used target texture map are loaded according to a requirement of game rendering, so that the memory loading overhead can be effectively reduced, and the memory burden can be reduced. Moreover, the fragmented textures corresponding to the target texture map are merged and rendered, so that the picture effect of rendering can be ensured, and the memory burden can be prevented from linearly increasing with running of a game, thereby ensuring that the game runs smoothly.

Based on the foregoing descriptions, a game rendering method is provided according to an embodiment of the present disclosure. The game rendering method may be applied to a user-side terminal, for example, a mobile phone, a tablet computer, or a personal computer (PC).

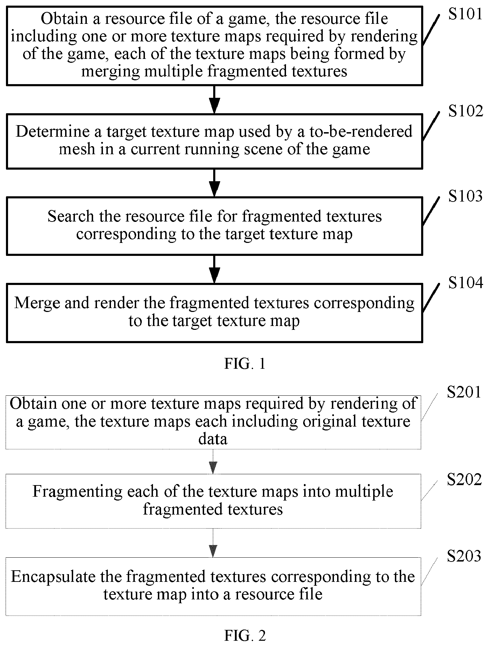

Referring to FIG. 1, the game rendering method may include the following steps S 101 to S 104.

In S 101, a resource file of a game is obtained. The resource file includes one or more texture maps required by rendering of the game, and each of the texture maps is formed by merging multiple fragmented textures.

The resource file of the game is a file formed after a resource packing process. The resource file includes but is not limited to one or more texture maps required by the game rendering, and may further include some animation resources required by the game rendering. It should be noted that, the texture map in the resource file is not a conventional entire texture map, but is formed by splicing and merging multiple fragmented textures. Generally, the resource file of the game is stored in a storage space of a terminal in which the game is located. For example, a resource file of a game in a computer is stored in a storage space allocated for the game by the computer, or a resource file of a game in mobile phone is stored in a storage space allocated for the game by the mobile phone. In this case, the resource file of the game may be obtained from the storage space of the terminal in which the game is located.

In S 102, a target texture map used by a to-be-rendered mesh in a current running scene of the game is determined.

A mesh is generally used to present an element correlated with a region in the game. For example, if a map is required to be presented in a region of a game scene, the map element may be presented based on the mesh. Common meshes include a square mesh, a hexagonal mesh, a triangular mesh, and the like. A game scene generally includes multiple meshes. If an element (for example, a character and scenery) is required to be presented in a mesh, the mesh needs to be rendered and is referred to as a to-be-rendered mesh. The mesh and the used texture map in the game scene are determined before the game rendering. For example, which element should be presented at a location in a scene is determined in the process of game development. In this way, the scene and the mesh are correlated with the texture map corresponding to the element, which may be reflected by correlation between a sequence number of the scene, a range of a coordinate of a pixel in which the mesh is located, and an ID of the texture map. Therefore, in step S 102, the used target texture map may be determined according to the current running scene of the game and the to-be-rendered mesh.

In S103, the resource file is searched for fragmented textures corresponding to the target texture map.

The target texture map in the resource file is not an entire texture map, but is formed by splicing and merging multiple fragmented textures. In a case that the target texture map to be rendered currently is determined, the multiple fragmented textures corresponding to the target texture map may be found in the resource file.

In 104, the fragmented textures corresponding to the target texture map are merged and rendered.

Merging and rendering the multiple fragmented textures of the target texture map, rather than rendering the entire target texture map, is intended to reduce the video memory burden and improve the rendering performance. Specifically, the merging and rendering process may be performed by loading the multiple fragmented textures of the target texture map into the memory, and submitting the loaded fragmented textures to a rendering engine of the game to be rendered. In an actual application, by merging and rendering the multiple fragmented textures, the same picture effect of rendering as that by rendering the entire target texture map can be achieved, and the memory burden and the video memory burden can be significantly reduced, thereby effectively improving the rendering performance.

According to this embodiment of the present disclosure, in a resource packing process, a texture map is fragmented into multiple fragmented textures, and the fragmented textures corresponding to a used target texture map are loaded according to a requirement of game rendering, so that the memory loading overhead can be effectively reduced, and the memory burden can be reduced. Moreover, the fragmented textures corresponding to the target texture map are merged and rendered, so that the picture effect of rendering can be ensured, and the memory burden can be prevented from linearly increasing with running of a game, thereby ensuring that the game runs smoothly.

A game resource file generation method is further provided according to an embodiment of the present disclosure. The game resource file generation method may be applied to a terminal used by a game developer or designer, for example, a PC.

Referring to FIG. 2, the game resource file generation method may include the following steps S201 to S210:

In S201, one or more texture maps required by game rendering are obtained. The texture maps each include original texture data.

In S202, for each of the texture maps, fragmentation processing is performed on the texture map to obtain multiple fragmented textures.

In S203, the fragmented textures corresponding to the texture map are encapsulated into a resource file of the game.

Steps S201 to S203 belong to a resource packing process. All texture maps required by the rendering of the game are generated by art designing in the game development. The texture map exists in a form of original texture data. In the resource packing process, the original texture data of the texture map is fragmented. Each texture map may be fragmented into multiple fragmented textures. The fragmented textures are encapsulated into the resource file and are to be used for the game rendering.

Optionally, each fragmented texture includes one piece of fragmented texture data and marginal original texture data of a preset width surrounding the fragmented texture data. The fragmentation process in step S202 may specifically include the following steps s11 to s13.

In s11, each of the texture maps is selected in turn, and the selected texture map is cut in rows into multiple rectangular frames according to a first preset specification.

In s12, original texture data included in the selected texture map is fragmented into multiple pieces of fragmented texture data according to a second preset specification, and marginal original texture data of a preset width is obtained around each of the pieces of fragmented texture data.

In s13, corresponding rectangular frames are filled with the multiple pieces of fragmented texture data and marginal original texture data of the preset width of the multiple pieces of fragmented texture data, to form one of the fragmented textures by each of the filled rectangular frames.

In actual implementation, step s13 may be performed by the following processes. Firstly, a margin of the preset width is reserved on each of an upper side and a lower side of each of the rectangular frames, and the margin of the preset width is added on each of a left side and right side of the rectangular frame, so that the rectangular frame has a central region and a marginal region surrounding the central region. Secondly, central regions of the corresponding rectangular frames are respectively filled with the multiple pieces of fragmented texture data, and marginal regions of the corresponding rectangular frames are respectively filled with the marginal original texture data of the preset width surrounding the multiple pieces of fragmented texture data, to form one of the fragmented textures by each of the filled rectangular frames.

By repeating the foregoing steps s11 to s13 for each texture map to perform the fragmentation process,. all texture maps may be each fragmented into multiple fragmented textures. A value of the first preset specification is greater than or equal to a sum of a value of the second preset specification and a value of twice the preset width. For example, the value of the first preset specification is 32 pixels, the value of the second preset specification is 30 pixels, and the preset width is 1 pixel. As another example, the value of the first preset specification is 16 pixels, the value of the second preset specification is 14 pixels, and the preset width is 1 pixel.

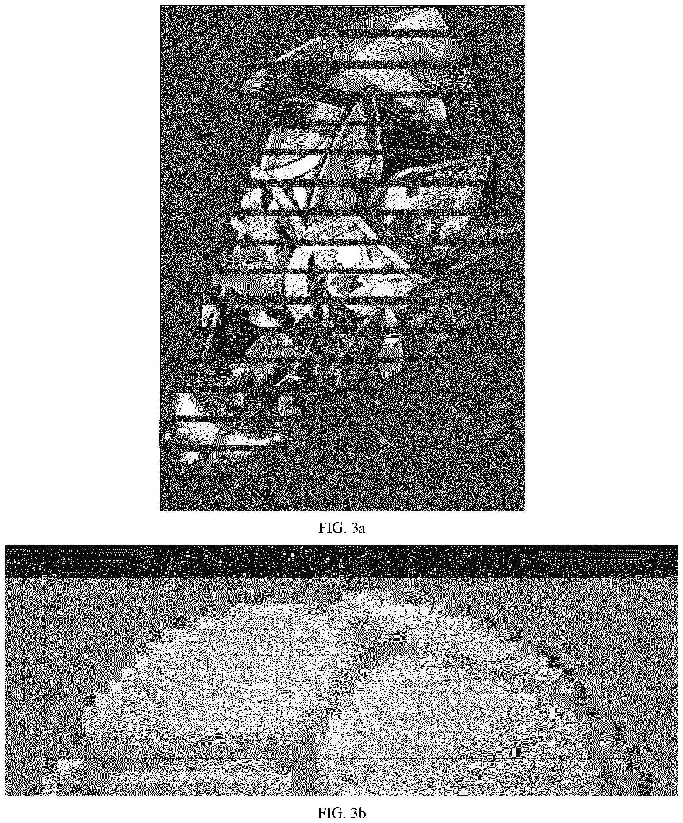

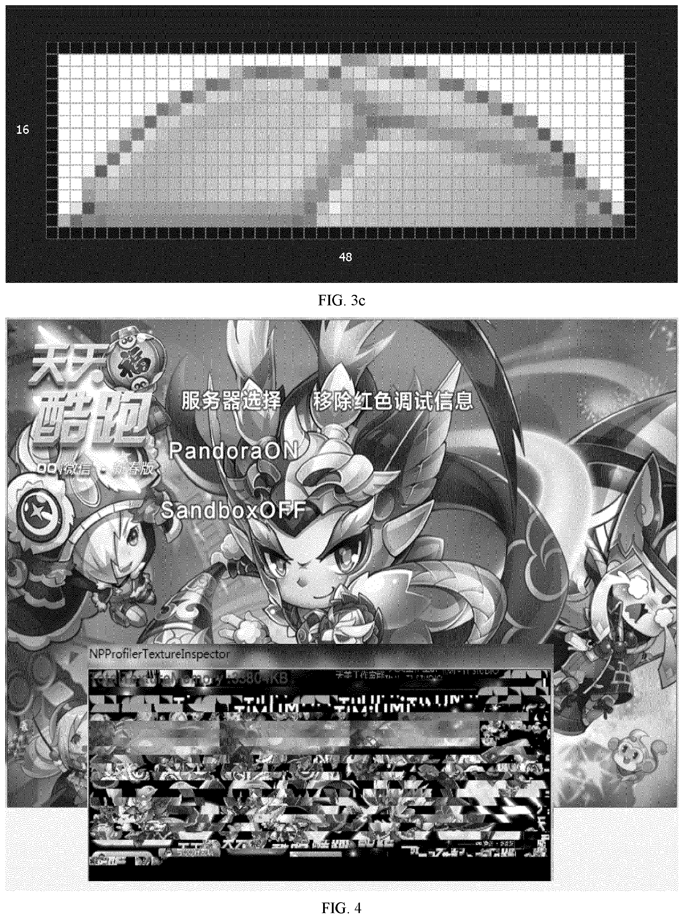

The fragmentation process of steps s11 to s13 is described below with reference to FIG. 3a to FIG. 3c. It is assumed that the first preset specification is 32 pixels, multiple rectangular frames shown in FIG. 3a may be obtained by cutting a texture map at a row height of 32 pixels. The row height of each rectangular frame is 32 pixels. Locations of multiple fragmented textures of a texture map in the video memory are not consecutive, and may be discrete. In a process that the multiple fragmented textures are spliced into a texture map for rendering, an irregular color seam appears in a case that the linear sampling is performed. In order to prevent the irregular color seam caused by the linear sampling, particular processing is required in the fragmentation process in this embodiment, which is shown with reference to FIG. 3a to FIG. 3c. Specifically, after the multiple rectangular frames with a row height of 32 pixels are obtained, a margin of 1 pixel is reserved on each of the upper side and the lower side of each rectangular frame, and the margin of 1 pixel is added on each of the left side and the right side of each rectangular frame, so that each rectangular frame has the central region with a height of 30 pixels and the marginal region with a width of 1 pixel surrounding the central region. Next, the original texture data included in the texture map is fragmented into multiple pieces of fragmented texture data at the row height of 30 pixels, and the marginal original texture data with a width of 1 pixel around each piece of fragmented texture data is obtained from the texture map. The central region of the rectangular frame is filled with the fragmented texture data with the row height of 30 pixels, and the marginal region with the width of 1 pixel around the central region is filled with the marginal original texture data. In this way, each filled rectangular frame forms one fragmented texture.

It should be noted that, in the foregoing examples, the description is given only by taking the case in which the margin of 1 pixel is reserved on each of the upper side and the lower side of the rectangular frame and the margin of 1 pixel is added on each of the left side and the right side of the rectangular frame to form the marginal region as an example. In another possible example, the margin of 1 pixel may be added on each of the upper side and the lower side of the rectangular frame, or the margin of 1 pixel may be reserved on each of the left side and the right side of the rectangular frame. In short, the marginal region may be formed by adding or reserving pixels.

The encapsulation process in step S203 may specifically include the following steps s21 to s23.

In s21, for each of the texture maps, an attribute of the texture map is obtained. The attribute includes an ID, a release type, and offset information. The release type includes immediate release, automatic release, or being resident in a memory.

An ID of a texture map is used for uniquely identifying the texture map. The offset information is used for determining a storage location of the texture map in the resource file. The release type may be set in the rendering engine of the game before the game rendering.

The immediate release refers to a case that, regardless of whether the texture map is added or replaced, the access to the texture map may not trigger loading of the texture map, and the texture map is loaded only if the texture map is actually required (for example, the texture map is required to draw an element in the game scene). Moreover, after the texture map is loaded, the memory space occupied by the texture map is released immediately once the texture map is no longer used (for example, the element is destroyed or hidden). In addition, the release of the texture map may be delayed, for example, by 2s or 5s, to prevent the texture map from being required to be loaded immediately after the release. A texture map used in an external interface of the game is of the immediate release type.

The automatic release refers to a case that, a reference count is set for a loaded texture map. Similar to a smart pointer, the reference count is increased every time the texture map is accessed, and the reference count is decreased in a case that an element corresponding to the texture map is destroyed or the texture map is replaced. The memory space occupied by the texture map is automatically released once the reference count returns to zero.

The being resident in a memory refers to a case that, after the texture map is loaded into the memory, the memory space occupied by the texture map is forcibly released only by using an internal interface of the rendering engine of the game.

In s22, a brief information table is generated based on attributes of the texture maps.

In s23, the brief information table is stored into a file header of the resource file, and the fragmented textures corresponding to each texture map are stored into a file body of the resource file.

In steps s21 to s23, the resource file includes two parts. The file header is used for storing the brief information table, and the file body is used for storing the multiple fragmented textures corresponding to the texture map. The texture map and the fragmented textures thereof can be searched for and loaded as required by using the brief information table.

Optionally, in combination with the fragmentation process described above, the merging and rendering process of step S104 in the game rendering process specifically includes the following steps s31 to s34.

In s31, a preset dynamic loading region in a memory is cut in rows into multiple dynamic loading rows according to a first preset specification.

In s32, for each of the dynamic loading rows, an idle region of the dynamic loading row is allocated by using a bin-packing algorithm.

In s33, the fragmented textures corresponding to the target texture map are loaded in turn into idle regions of the dynamic loading rows.

In s34, the loaded fragmented textures are read from the dynamic loading rows, and the read fragmented textures are submitted to a rendering engine of the game to be rendered.

In steps s31 to s34, the preset dynamic loading region in the memory refers to a region which is pre-allocated in the memory and is used to dynamically load the fragmented textures. According to an actual situation, the preset dynamic loading region may have a size equal to a size of one or more dynamic texture maps. For example, the preset dynamic loading region may be represented as one or more dynamic texture maps each with the size of 2048^{∗}1024. The preset dynamic loading region in the memory may be cut into multiple rows according to the first preset specification (16 pixels or 32 pixels). Each row is a dynamic loading row. For each dynamic loading row, the idle region in the dynamic loading row may be allocated by using the bin-packing algorithm. The idle regions of the dynamic loading rows are allocated to the multiple fragmented textures of the target texture map needing to be loaded. After the fragmented textures are loaded, the fragmented textures are submitted to the rendering engine of the game to be rendered. It should be noted that, the merging and rendering process herein is performed by using a rendering optimization algorithm. In the rendering optimization algorithm, based on the conventional rendering method for an entire texture map and CPU clipping, coordinates of the entire texture map are calculated by using the conventional rendering method, and coordinates of each fragmented texture are calculated based on a relative location proportion of the fragmented texture in the entire texture map. In actual implementation, the rendering optimization algorithm may be represented by using the following code snippets:

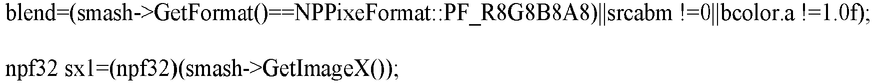

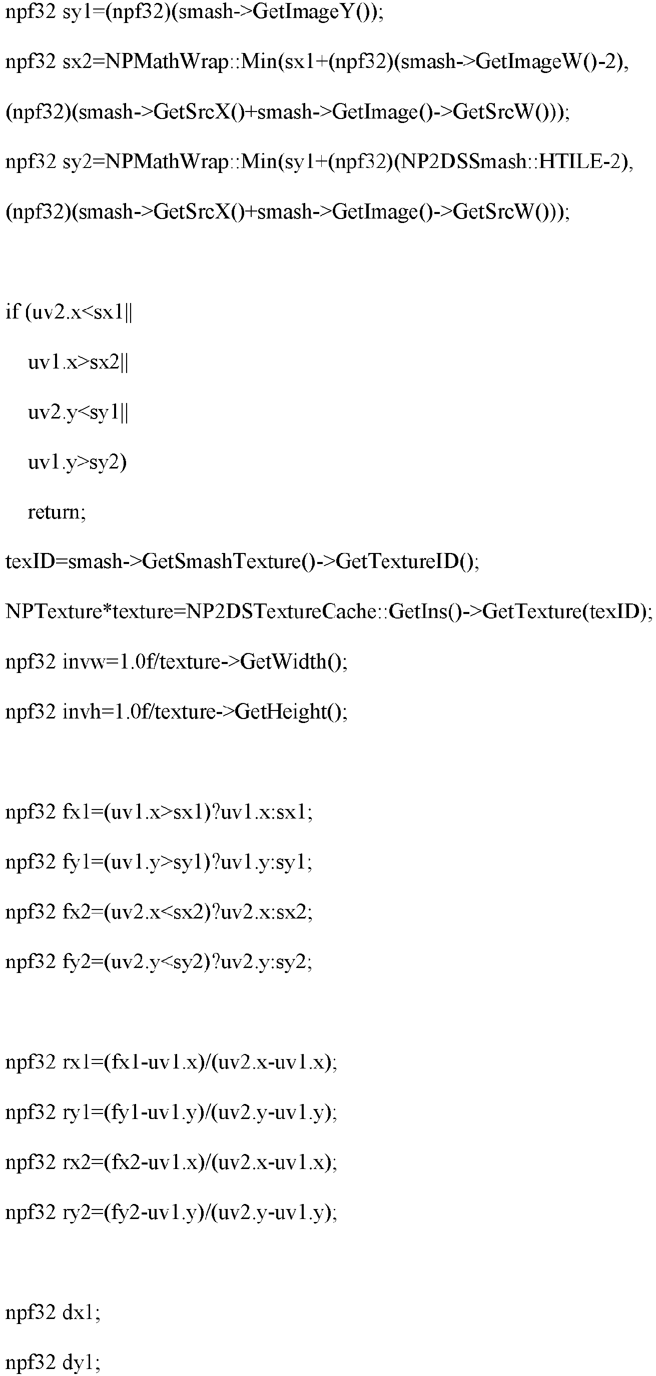

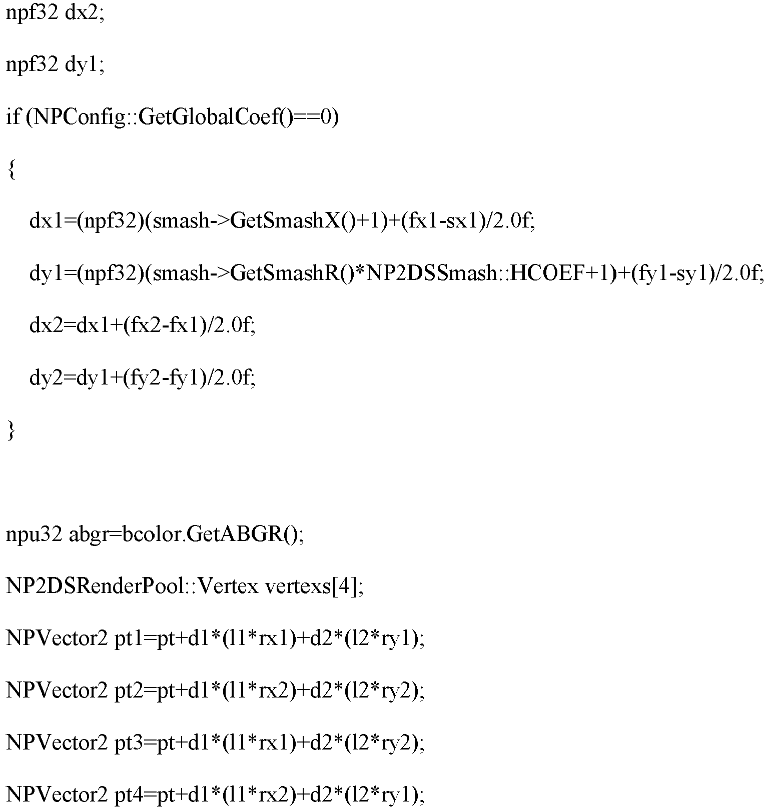

It can been seen from an actual rendering effect in the game and a storage state of the fragmented textures in the video memory shown in FIG. 4 that, the fragmented textures in the video memory are arranged in rows. In an actual application, by merging and rendering the multiple fragmented textures, the same picture effect as that by rendering the entire target texture map can be achieved, and the memory burden and the video memory burden can be significantly reduced, thereby effectively improving the rendering performance.

Optionally, the game rendering method provided in this embodiment of the present disclosure further includes the following steps S208 to S210.

In S208, a release type of the target texture map is obtained from the file header of the resource file.

In S209, the dynamic loading rows occupied by the fragmented textures of the target texture map are released according to the obtained release type.

In S210, the recycled dynamic loading rows are merged.

In steps S208 to S210, after the multiple fragmented textures of the target texture map are merged and rendered, the memory space occupied by each fragmented texture needs to be released according to the release type of the target texture map. Specifically, since the fragmented textures are loaded into the dynamic loading rows in the memory, the allocated idle regions of the dynamic loading rows are recycled after the memory space occupied by the fragmented textures is released. The recycled dynamic loading rows are then merged. It should be understood that, the dynamic loading rows are initially obtained by cutting the preset dynamic loading region. After being recycled, all of the dynamic loading rows may be merged to form the preset dynamic loading region.

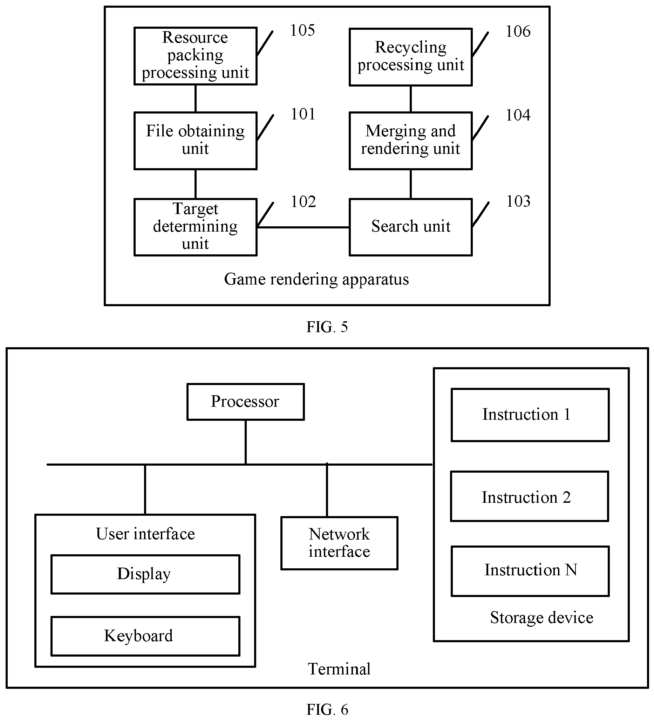

Based on the foregoing embodiment of the game rendering method, a game rendering apparatus is further provided according to an embodiment of the present disclosure. The game rendering apparatus may be a computer program (including program codes), and the computer program may be executed in a terminal (for example, a PC or a mobile phone) to perform the game rendering method described in the foregoing embodiment. Referring to FIG. 5, the game rendering apparatus operates the following units including a file obtaining unit 101, a target determining unit 102, a search unit 103, and a merging and rendering unit 104.

The file obtaining unit 101 is configured to obtain a resource file of a game. The resource file includes one or more texture maps required by rendering of the game, and each of the texture maps is formed by merging multiple fragmented textures.

The target determining unit 102 is configured to determine a target texture map used by a to-be-rendered mesh in a current running scene of the game.

The search unit 103 is configured to search the resource file for multiple fragmented textures corresponding to the target texture map.

The merging and rendering unit 104 is configured to merge and render the multiple fragmented textures corresponding to the target texture map.

Optionally, the game rendering apparatus further operates a resource packing processing unit 105.

The resource packing processing unit 105 is configured to: obtain the one or more texture maps required by the rendering of the game, the texture maps each including original texture data; fragment each of the texture maps into multiple fragmented textures, each of the fragmented textures including one piece of fragmented texture data and marginal original texture data of a preset width surrounding the fragmented texture data; and encapsulate the multiple fragmented textures corresponding to the texture map into the resource file.

Optionally, the game rendering apparatus further operates a recycling processing unit 106.

The recycling processing unit 106 is configured to: obtain a release type of the target texture map from a file header of the resource file; release dynamic loading rows occupied by the fragmented textures of the target texture map according to the obtained release type; and merge the recycled dynamic loading rows.

In actual implementation, the game rendering apparatus operates the resource packing processing unit 105 to: select each of the texture maps in turn, and cutting the selected texture map in rows into multiple rectangular frames according to a first preset specification; fragment original texture data included in the selected texture map into multiple pieces of fragmented texture data according to a second preset specification, and obtain marginal original texture data of a preset width around each of the pieces of fragmented texture data; and fill corresponding rectangular frames with the multiple pieces of fragmented texture data and marginal original texture data of the preset width of the multiple pieces of fragmented texture data, to form one of the fragmented textures by each of the filled rectangular frames, where a value of the first preset specification is greater than or equal to a sum of a value of the second preset specification and a value of twice the preset width.

The process of filling corresponding rectangular frames with the multiple pieces of fragmented texture data and marginal original texture data of the preset width of the multiple pieces of fragmented texture data, to form one of the fragmented textures by each of the filled rectangular frames includes: reserving a margin of the preset width on each of an upper side and a lower side of each of the rectangular frames, and adding the margin of the preset width on each of a left side and right side of the rectangular frame, so that the rectangular frame has a central region and a marginal region surrounding the central region; and filling central regions of the corresponding rectangular frames respectively with the multiple pieces of fragmented texture data, and filling marginal regions of the corresponding rectangular frames respectively with the marginal original texture data of the preset width surrounding the multiple pieces of fragmented texture data, to form one of the fragmented textures by each of the filled rectangular frames.

The game rendering apparatus operates the resource packing processing unit 105 further to: obtain, for each of the texture maps, an attribute of the texture map, the attribute including an ID, a release type, and offset information, the release type including immediate release, automatic release, or being resident in a memory; generate a brief information table based on attributes of the texture maps; and store the brief information table into the file header of the resource file, and store the multiple fragmented textures corresponding to each of the texture maps into a file body of the resource file.

In actual implementation, the game rendering apparatus operates the merging and rendering unit 104 to: cut a preset dynamic loading region in a memory in rows into multiple dynamic loading rows according to a first preset specification; allocate, for each of the dynamic loading rows, an idle region of the dynamic loading row by using a bin-packing algorithm; load the fragmented textures corresponding to the target texture map in turn into the idle regions of the dynamic loading rows; and read the loaded fragmented textures from the dynamic loading rows and submit the read fragmented textures to a rendering engine of the game to be rendered.

According to an embodiment of the present disclosure, steps S101 to S104 in the game rendering method shown in FIG. 1 may be performed by the units of the game rendering apparatus shown in FIG. 5. For example, steps S101 to S104 shown in FIG. 1 may be respectively performed by the file obtaining unit 101, the target determining unit 102, the search unit 103, and the merging and rendering unit 104 shown in FIG. 5.

Optionally, steps S201 to S203 in the game resource file generation method shown in FIG. 2 may be performed by the resource packing processing unit 105 shown in FIG. 5.

Optionally, the foregoing steps S208 to S210 may be performed by the recycling processing unit 106 shown in FIG. 5.

In addition, based on the foregoing embodiment of the game resource file generation method, a game resource file generation apparatus is further provided according to an embodiment of the present disclosure. The game resource file generation apparatus may be a computer program (including program codes), and the computer program may be executed in a terminal (for example, a PC) to perform the game resource file generation method described in the foregoing embodiment. Exemplarily, the game resource file generation apparatus may operate a map obtaining unit, a fragmentation unit and a file encapsulation unit.

The map obtaining unit is configured to obtain one or more texture maps required by rendering of a game, the texture maps each including original texture data.

The fragmentation unit is configured to fragment each of the texture maps into multiple fragmented textures.

The file encapsulation unit is configured to encapsulate the fragmented textures corresponding to the texture map into a resource file of the game.

According to an embodiment of the present disclosure, steps S201 to S203 in the game resource file generation method shown in FIG. 2 may be performed by the units of the game resource file generation apparatus. For example, steps S201 to S203 shown in FIG. 2 may be respectively performed by the map obtaining unit, the fragmentation unit, and the file encapsulation unit.

In addition, specific operation processes of the map obtaining unit, the fragmentation unit and the file encapsulation unit may refer to the related description of the specific operation process of the resource packing processing unit 105 in the embodiment shown in FIG. 5, which are not described herein again.

According to another embodiment of the present disclosure, a part or all of the units of the game rendering apparatus or the game resource file generation apparatus described in the foregoing may be combined into one or more other units, or one (or more) of the units may be divided into multiple units having small functions. In this case, the same operation as the above can be implemented without affecting the technical effects of the embodiments of the present disclosure. The foregoing units are divided based on logical functions. In an actual application, a function of one unit may be implemented by multiple units, or functions of multiple units are implemented by one unit. In other embodiments of the present disclosure, the game rendering apparatus may further include another unit. In an actual practical application, these functions may also be cooperatively implemented by another unit and may be cooperatively implemented by multiple units.

According to another embodiment of the present disclosure, the computer program (including program codes) that is executed to implement the steps in the method shown in FIG. 1 or FIG. 2 may be executed on a general computing device of a computer including processing elements such as a central processing unit (CPU) and storage elements such as a random access memory (RAM) and a read-only memory (ROM), to implement the game rendering method or the game resource file generation method according to the embodiments of the present disclosure. The computer program may be recorded in, for example, a computer readable recording medium, and may be loaded into the foregoing computing device via the computer readable recording medium, and is executed in the computing device. The computer readable recording medium may be referred to as a computer readable storage medium or the storage device described above. For example, the computer readable recording medium may be a ROM, a RAM, a CD-ROM, a magnetic tape, a floppy disk, or an optical data storage device.

According to the embodiments of the present disclosure, in a resource packing process, a texture map is fragmented into multiple fragmented textures, and the fragmented textures corresponding to a used target texture map are loaded according to a requirement of game rendering, so that the memory loading overhead can be effectively reduced, and the memory burden can be reduced. Moreover, the fragmented textures corresponding to the target texture map are merged and rendered, so that the picture effect of rendering can be ensured, and the memory burden can be prevented from linearly increasing with running of a game, thereby ensuring that the game runs smoothly.

Based on the method and the apparatus according to the foregoing embodiments, a terminal is further provided according to an embodiment of the present disclosure. The terminal may be used to perform the steps of the method flow shown in FIG. 1 or the steps of the method flow shown in FIG. 2. In actual implementation, the terminal described in the embodiment of the present disclosure includes but is not limited to portable devices such as a mobile phone, a laptop computer, or a tablet computer provided with a touch-sensitive surface (for example, a touchscreen display and/or a touch pad). It should further be understood that, in some embodiments, the terminal may not be a portable communication device, but a desktop computer with a touch-sensitive surface (for example, a touchscreen display and/or touch pad). Referring to FIG. 6, internal structures of the terminal may include a processor, a user interface, a network interface, and a storage device. The processor, the user interface, the network interface, and the storage device in the terminal may be connected through a bus or in another manner. In the embodiment shown in FIG. 6, connection through a bus is shown as an example.

The user interface is a medium used for interaction and information exchange between a user and a terminal, including a display used for the outputting, a keyboard used for the inputting, and so on. It should be noted that, the keyboard here may be a physical keyboard, or a touch-screen virtual keyboard, or a keyboard combining a physical keyboard and a touch-screen virtual keyboard. It should be understood that, the user interface may further include one or more other physical user interface devices such as a mouse and/or a control handle. The processor (or central processing unit (CPU)) is a computing core and a control core of the terminal. The processor is configured to implement one or more instructions, specifically, load and execute the one or more instructions to implement the corresponding method flows or functions, For example, the CPU may be used to parse an on/off instruction transmitted by the user to the terminal, and control the terminal to perform on/off operations. For another example, the CPU may transmit various interaction data between internal structures of the terminal, and the like. The storage device (Memory) is a memory device in the terminal, and is used to store programs and data. It can be understood that, the storage device herein may include an internal storage device of the terminal, and may also include an expanded storage device supported by the terminal. The storage device provides a storage space, in which an operating system of the terminal may be stored. One or more instructions that may be loaded and executed by the processor are further stored in the storage space. The instructions may be one or more computer programs (including program codes). It should be noted that, the storage device herein may be a high speed RAM memory or a non-volatile memory, for example, at least one magnetic disk memory. Optionally, the storage device may be at least one storage device located away from the foregoing processor.

It should further be noted that, the terminal supports various application programs, for example, one or more of the following: a drawing application program, a demonstration application program, a word processing application program, a website establishing application program, a disk burning application program, a spreadsheet application program, a game application program, a telephone application program, a video conferencing application program, an email application program, an instant messaging application program, an exercise supporting application program, a photo management application program, a digital camera application program, a digital video camera application program, a web browsing application program, a digital music player application program, and/or a digital video player application program. The various application programs that may be executed on the terminal may use, for example, at least one public physical user interface device on the touch-sensitive surface. One or more functions of the touch-sensitive surface and corresponding information displayed on the terminal may be adjusted and/or changed between the application programs and/or in a corresponding application program. In this case, the public physical architecture (for example, the touch-sensitive surface) of the terminal may support various application programs of the user interface that are intuitive and transparent to the user.

In an embodiment of the present disclosure, the processor loads and executes one or more instructions stored in the storage device to implement corresponding steps in the method flow shown in FIG. 1 or FIG. 2. In actual implementation, the one or more instructions in the storage device are loaded by the processor to perform the following steps of:
obtaining a resource file of a game, the resource file including one or more texture maps required by rendering of the game, each of the texture maps being formed by merging multiple fragmented textures;
determining a target texture map used by a to-be-rendered mesh in a current running scene of the game;
searching the resource file for fragmented textures corresponding to the target texture map; and
merging and rendering the fragmented textures corresponding to the target texture map.

In actual implementation, before obtaining the resource file of the game, the one or more instructions in the storage device are loaded by the processor to further perform the following steps of:
obtaining one or more texture maps required by rendering of the game, the texture maps each including original texture data;
fragmenting each of the texture maps into multiple fragmented textures, each of the fragmented textures including one piece of fragmented texture data and marginal original texture data of a preset width surrounding the fragmented texture data;
encapsulating the fragmented textures corresponding to the texture map into the resource file.

In actual implementation, in the process of fragmenting each of the texture maps into multiple fragmented textures, the one or more instructions in the storage device are loaded by the processor to specifically perform the following steps of:
selecting each of the texture maps in turn, and cutting the selected texture map in rows into multiple rectangular frames according to a first preset specification;
fragmenting original texture data included in the selected texture map into multiple pieces of fragmented texture data according to a second preset specification, and obtaining marginal original texture data of a preset width around each of the pieces of fragmented texture data; and
filling corresponding rectangular frames with the multiple pieces of fragmented texture data and marginal original texture data of the preset width of the multiple pieces of fragmented texture data, to form one of the fragmented textures by each of the filled rectangular frames, where
a value of the first preset specification is greater than or equal to a sum of a value of the second preset specification and a value of twice the preset width.

In actual implementation, in the process of filling corresponding rectangular frames with the multiple pieces of fragmented texture data and marginal original texture data of the preset width of the multiple pieces of fragmented texture data, to form one of the fragmented textures by each of the filled rectangular frames, the one or more instructions in the storage device are loaded by the processor to specifically perform the following steps of:
reserving a margin of the preset width on each of an upper side and a lower side of each of the rectangular frames, and adding the margin of the preset width on each of a left side and right side of the rectangular frame, so that the rectangular frame has a central region and a marginal region surrounding the central region; and
filling central regions of the corresponding rectangular frames respectively with the multiple pieces of fragmented texture data, and filling marginal regions of the corresponding rectangular frames respectively with the marginal original texture data of the preset width surrounding the multiple pieces of fragmented texture data, to form one of the fragmented textures by each of the filled rectangular frames.

In actual implementation, in the process of encapsulating, for each of the texture maps, the fragmented textures corresponding to the texture map into the resource file, the one or more instructions in the storage device are loaded by the processor to specifically perform the following steps of:
obtaining, for each of the texture maps, an attribute of the texture map, the attribute including an ID, a release type, and offset information, the release type including immediate release, automatic release, or being resident in a memory;
generating a brief information table based on attributes of the texture maps; and
storing the brief information table into a file header of the resource file, and storing the fragmented textures corresponding to each of texture maps into a file body of the resource file.

In actual implementation, in the process of merging and rendering the fragmented textures corresponding to the target texture map, the one or more instructions in the storage device are loaded by the processor to specifically perform the following steps of:
cutting a preset dynamic loading region in a memory in rows into multiple dynamic loading rows according to a first preset specification;
allocating, for each of the dynamic loading rows, an idle region of the dynamic loading row by using a bin-packing algorithm;
loading the fragmented textures corresponding to the target texture map in turn into idle regions of the dynamic loading rows; and
reading the loaded fragmented textures from the dynamic loading rows and submitting the read fragmented textures to a rendering engine of the game to be rendered.

In actual implementation, after merging and rendering the multiple fragmented textures of the target texture map, the one or more instructions in the storage device are loaded by the processor to further perform the following steps of:
obtaining a release type of the target texture map from the file header of the resource file;
releasing the dynamic loading rows occupied by the fragmented textures of the target texture map according to the obtained release type; and
merging the recycled dynamic loading rows.

In another embodiment, the one or more instructions in the storage device are loaded by the processor to perform the following steps of:
obtaining one or more texture maps required by rendering of a game, the texture maps each including original texture data;
fragmenting each of the texture maps into multiple fragmented textures; and
encapsulating the fragmented textures corresponding to the texture map into the resource file of the game.

According to this embodiment of the present disclosure, in a resource packing process, a texture map is fragmented into multiple fragmented textures, and the fragmented textures corresponding to a used target texture map are loaded according to a requirement of game rendering, so that the memory loading overhead can be effectively reduced, and the memory burden can be reduced. Moreover, the fragmented textures corresponding to the target texture map are merged and rendered, so that the picture effect of rendering can be ensured, and the memory burden can be prevented from linearly increasing with running of a game, thereby ensuring that the game runs smoothly.

In the description of the present disclosure, description for reference terms such as "one embodiment", "some embodiments", "example", "specific example" or "some examples" is intended to include specific features, structures, materials, or features described in combination with the embodiment or example in at least one embodiment or example of the present disclosure. In this specification, schematic descriptions of the foregoing terms are not necessarily directed to a same embodiment or example. In addition, the described specific features, structures, materials, or features may be combined in a proper manner in any one or more embodiments or examples. In addition, in the case of being not mutually contradictory, a person skilled in the art may combine or group different embodiments or examples that are described in this specification and features of the different embodiments or examples.

In addition, terms "first" and "second" are only used for the description and should not be understood as indicating or implying relative importance or implying the number of the indicated technical features. Therefore, features defined by the "first" and "second" may explicitly or implicitly include one or more of the features. In the description of the present disclosure, unless explicitly specified, "multiple" means at least two, for example, two or three.

Any process or method in the flowcharts or described herein in another manner may be understood as indicating a module, a segment, or a part including code of one or more executable instructions for implementing particular logical functions or process steps. In addition, the scope of embodiments of the present disclosure includes other implementations in which the functions are performed in an order different from the shown or discussed order, including a basically simultaneously order or a reverse order depending on the involved functions, which should be understood by a person skilled in the art.

Parts of the present disclosure may be implemented by using hardware, software, firmware, or a combination thereof. In the foregoing implementations, multiple steps or methods may be implemented by using software or firmware that is stored in a storage device and is executed by a proper instruction execution system. For example, in the case of being implemented by hardware, like another implementation, the multiple steps or methods may be implemented by any one of the following common technologies in the art or a combination thereof: a discrete logic circuit having a logic gate circuit for realizing a logic function for a data signal, an application specific integrated circuit having a suitable combined logic gate circuit, a programmable gate array (PGA), a field programmable gate array (FPGA), and the like. In addition, the functional units in the embodiments of the present disclosure may be integrated into one processing module, or each of the units may exist alone physically, or two or more of the units are integrated into one module. The integrated module may be implemented in a form of hardware, or may be implemented in a form of a software functional module. In the case that the integrated module is implemented in the form of a software functional module and is sold or used as an independent product, the integrated module may be stored in a computer-readable storage medium.

The foregoing merely discloses preferred embodiments of the present disclosure, and certainly is not intended to limit the protection scope of the present disclosure. Therefore, equivalent variations made in accordance with the claims of the present disclosure shall fall within the scope of the present disclosure.

## Claims

1. A game rendering method, comprising:
obtaining (S101) a resource file of a game, the resource file comprising one or more texture maps required by rendering of the game, each of the texture maps being formed by merging a plurality of fragmented textures;
determining (S102) a target texture map used by a to-be-rendered mesh in a current running scene of the game;
searching (S103) the resource file for fragmented textures corresponding to the target texture map; and
merging and rendering (S104) the fragmented textures corresponding to the target texture map;
wherein before the obtaining (S101) a resource file of a game, the method further comprises:
obtaining (S201) one or more texture maps required by rendering of the game, the texture maps each comprising original texture data;
fragmenting (S202) each of the texture maps into a plurality of fragmented textures, each of the fragmented textures comprising one piece of fragmented texture data and marginal original texture data of a preset width surrounding the fragmented texture data;
encapsulating (S203) the fragmented textures corresponding to the texture map into the resource file;
wherein the fragmenting (S202) each of the texture maps into a plurality of fragmented textures comprises:
selecting each of the texture maps in turn, and cutting the selected texture map in rows into a plurality of rectangular frames according to a first preset specification;
fragmenting original texture data comprised in the selected texture map into a plurality of pieces of fragmented texture data according to a second preset specification, and obtaining marginal original texture data of a preset width around each of the pieces of fragmented texture data; and
filling corresponding rectangular frames with the plurality of pieces of fragmented texture data and marginal original texture data of the preset width of the plurality of pieces of fragmented texture data, to form one of the fragmented textures by each of the filled rectangular frames, wherein
a value of the first preset specification is greater than or equal to a sum of a value of the second preset specification and a value of twice the preset width.

2. The game rendering method according to claim 1, wherein the filling corresponding rectangular frames with the plurality of pieces of fragmented texture data and marginal original texture data of the preset width of the plurality of pieces of fragmented texture data, to form one of the fragmented textures by each of the filled rectangular frames comprises:
reserving a margin of the preset width on each of an upper side and a lower side of each of the rectangular frames, and adding the margin of the preset width on each of a left side and right side of the rectangular frame, so that the rectangular frame has a central region and a marginal region surrounding the central region; and
filling central regions of the corresponding rectangular frames respectively with the plurality of pieces of fragmented texture data, and filling marginal regions of the corresponding rectangular frames respectively with the marginal original texture data of the preset width surrounding the plurality of pieces of fragmented texture data, to form one of the fragmented textures by each of the filled rectangular frames.

3. The game rendering method according to claim 1, wherein the encapsulating (S203), for each of the texture maps, the fragmented textures corresponding to the texture map into the resource file comprises:
obtaining, for each of the texture maps, an attribute of the texture map, the attribute comprising an ID, a release type, and offset information, the release type comprising immediate release, automatic release, or being resident in a memory;
generating a brief information table based on attributes of the texture maps; and
storing the brief information table into a file header of the resource file, and storing the fragmented textures corresponding to each of the texture maps into a file body of the resource file.

4. The game rendering method according to any one of claims 1 to 3, wherein the merging and rendering (S104) the fragmented textures corresponding to the target texture map comprises:
cutting a preset dynamic loading region in a memory in rows into a plurality of dynamic loading rows according to a first preset specification;
allocating, for each of the dynamic loading rows, an idle region of the dynamic loading row by using a bin-packing algorithm;
loading the fragmented textures corresponding to the target texture map in turn into idle regions of the dynamic loading rows; and
reading the loaded fragmented textures from the dynamic loading rows and submitting the read fragmented textures to a rendering engine of the game to be rendered.

5. The game rendering method according to claim 3, wherein after the merging and rendering (S104) the fragmented textures corresponding to the target texture map, the method further comprises:
obtaining a release type of the target texture map from the file header of the resource file;
releasing the dynamic loading rows occupied by the fragmented textures of the target texture map according to the obtained release type; and
merging the recycled dynamic loading rows.

6. A game resource file generation method, comprising:
obtaining (S201) one or more texture maps required by rendering of a game, the texture maps each comprising original texture data;
fragmenting (S202) each of the texture maps into a plurality of fragmented textures; and
encapsulating (S203) the fragmented textures corresponding to the texture map into the resource file of the game;
wherein the fragmenting (S202) each of the texture maps into a plurality of fragmented textures comprises:
selecting each of the texture maps in turn, and cutting the selected texture map in rows into a plurality of rectangular frames according to a first preset specification;
fragmenting original texture data comprised in the selected texture map into a plurality of pieces of fragmented texture data according to a second preset specification, and obtaining marginal original texture data of a preset width around each of the pieces of fragmented texture data; and
filling corresponding rectangular frames with the plurality of pieces of fragmented texture data and marginal original texture data of the preset width of the plurality of pieces of fragmented texture data, to form one of the fragmented textures by each of the filled rectangular frames, wherein
a value of the first preset specification is greater than or equal to a sum of a value of the second preset specification and a value of twice the preset width.

7. A game rendering apparatus, comprising:
a file obtaining unit (101), configured to obtain a resource file of a game, the resource file comprising one or more texture maps required by rendering of the game, each of the texture maps being formed by merging a plurality of fragmented textures;
a target determining unit (102), configured to determine a target texture map used by a to-be-rendered mesh in a current running scene of the game;
a search unit (103), configured to search the resource file for fragmented textures corresponding to the target texture map;
a merging and rendering unit (104), configured to merge and render the fragmented textures corresponding to the target texture map; and
a resource packing processing unit (105), configured to: obtain the one or more texture maps required by the rendering of the game, the texture maps each comprising original texture data; fragment each of the texture maps into a plurality of fragmented textures, each of the fragmented textures comprising one piece of fragmented texture data and marginal original texture data of a preset width surrounding the fragmented texture data; and encapsulate the plurality of fragmented textures corresponding to the texture map into the resource file;
wherein the resource packing processing unit (105) is configured to: select each of the texture maps in turn, and cut the selected texture map in rows into a plurality of rectangular frames according to a first preset specification; fragment original texture data comprised in the selected texture map into a plurality of pieces of fragmented texture data according to a second preset specification, and obtain marginal original texture data of a preset width around each of the pieces of fragmented texture data; and fill corresponding rectangular frames with the plurality of pieces of fragmented texture data and marginal original texture data of the preset width of the plurality of pieces of fragmented texture data, to form one of the fragmented textures by each of the filled rectangular frames, wherein a value of the first preset specification is greater than or equal to a sum of a value of the second preset specification and a value of twice the preset width.

8. The game rendering apparatus according to claim 7, further comprising:
a recycling processing unit (106), configured to: obtain a release type of the target texture map from a file header of the resource file; release dynamic loading rows occupied by the fragmented textures of the target texture map according to the obtained release type; and merge the recycled dynamic loading rows.

9. The game rendering apparatus according to claim 8, wherein
the resource packing processing unit (105) is configured to fill corresponding rectangular frames with the plurality of pieces of fragmented texture data and the marginal original texture data of the preset width of the plurality of pieces of fragmented texture data, to form one of the fragmented textures by each of the filled rectangular frames by: reserving a margin of the preset width on each of an upper side and a lower side of each of the rectangular frames, and adding the margin of the preset width on each of a left side and right side of the rectangular frame, so that the rectangular frame has a central region and a marginal region surrounding the central region; and filling central regions of the corresponding rectangular frames respectively with the plurality of pieces of fragmented texture data, and filling marginal regions of the corresponding rectangular frames respectively with the marginal original texture data of the preset width surrounding the plurality of pieces of fragmented texture data, to form one of the fragmented textures by each of the filled rectangular frames; and
the resource packing processing unit (105) is configured to: obtain, for each of the texture maps, an attribute of the texture map, the attribute comprising an ID, a release type, and offset information, the release type comprising immediate release, automatic release, or being resident in a memory; generate a brief information table based on attributes of the texture maps; and store the brief information table into the file header of the resource file, and store the fragmented textures corresponding to each of the texture maps into a file body of the resource file.

10. The game rendering apparatus according to claim 8 or 9, wherein the merging and rendering unit (104) is configured to: cut a preset dynamic loading region in a memory in rows into a plurality of dynamic loading rows according to a first preset specification; allocate, for each of the dynamic loading rows, an idle region of the dynamic loading row by using a bin-packing algorithm; load the fragmented textures corresponding to the target texture map in turn into idle regions of the dynamic loading rows; and read the loaded fragmented textures from the dynamic loading rows and submit the read fragmented textures to a rendering engine of the game to be rendered.

11. A game resource file generation apparatus, comprising:
a map obtaining unit, configured to obtain one or more texture maps required by rendering of a game, the texture maps each comprising original texture data;
a fragmentation unit, configured to fragment each of the texture maps into a plurality of fragmented textures; and
a file encapsulation unit, configured to encapsulate the fragmented textures corresponding to the texture map into a resource file of the game,
wherein the fragmentation unit is configured to:
select each of the texture maps in turn, and cutting the selected texture map in rows into a plurality of rectangular frames according to a first preset specification;
fragment original texture data comprised in the selected texture map into a plurality of pieces of fragmented texture data according to a second preset specification, and obtaining marginal original texture data of a preset width around each of the pieces of fragmented texture data; and
fill corresponding rectangular frames with the plurality of pieces of fragmented texture data and marginal original texture data of the preset width of the plurality of pieces of fragmented texture data, to form one of the fragmented textures by each of the filled rectangular frames, wherein
a value of the first preset specification is greater than or equal to a sum of a value of the second preset specification and a value of twice the preset width.

12. A storage device storing one or more instructions, wherein the one or more instructions are loaded by a processor to implement the game rendering method according to any one of claims 1 to 5, or the game resource file generation method according to claim 6.

13. A terminal, comprising:
a processor, configured to execute one or more instructions; and
a storage device storing the one or more instructions, wherein the one or more instructions are loaded by the processor to implement the game rendering method according to any one of claims 1 to 5, or the game resource file generation method according to claim 6.

## Patentansprüche

1. Spiel-Rendering-Verfahren, umfassend:
Erhalten (S101) einer Ressourcendatei eines Spiels, wobei die Ressourcendatei eine oder mehrere Textur-Maps umfasst, die für das Rendern des Spiels erforderlich sind, wobei jede der Textur-Maps durch Zusammenfügen einer Mehrzahl von fragmentierten Texturen gebildet wird;
Bestimmen (S102) einer Ziel-Textur-Map, die von einem zu rendernden Netz in einer aktuell laufenden Szene des Spiels verwendet wird;
Durchsuchen (S103) der Ressourcendatei nach fragmentierten Texturen, die zu der Ziel-Textur-Map korrespondieren; und
Zusammenfügen und Rendern (S104) der fragmentierten Texturen, die zu der Ziel-Textur-Map korrespondieren;
wobei das Verfahren vor dem Erhalten (S101) einer Ressourcendatei eines Spiels des Weiteren umfasst:
Erhalten (S201) einer oder mehrerer Textur-Maps, die für das Rendern des Spiels erforderlich sind, wobei die Textur-Maps jeweils Original-Texturdaten umfassen;
Fragmentieren (S202) jeder der Textur-Maps in eine Mehrzahl von fragmentierten Texturen, wobei jede der fragmentierten Texturen ein Stück fragmentierter Texturdaten und Randoriginaltexturdaten mit einer voreingestellten Breite, die die fragmentierten Texturdaten umgeben, umfasst;
Einkapseln (S203) der fragmentierten Texturen, die zu der Textur-Map korrespondieren, in die Ressourcendatei;
wobei das Fragmentieren (S202) jeder der Textur-Maps in eine Mehrzahl von fragmentierten Texturen umfasst:
Auswählen jeder der Textur-Maps der Reihe nach, und Schneiden der ausgewählten Textur-Map in Zeilen in eine Mehrzahl von rechteckigen Rahmen gemäß einer ersten voreingestellten Spezifikation;
Fragmentieren von Originaltexturdaten, die in der ausgewählten Textur-Map enthalten sind, in eine Mehrzahl von Stücken von fragmentierten Texturdaten gemäß einer zweiten voreingestellten Spezifikation, und Erhalten von Randoriginaltexturdaten einer voreingestellten Breite um jedes der Stücke von fragmentierten Texturdaten herum; und
Füllen von korrespondierenden rechteckigen Rahmen mit der Mehrzahl von Stücken von fragmentierten Texturdaten und Randoriginaltexturdaten der voreingestellten Breite der Mehrzahl von Stücken fragmentierter Texturdaten, um eine der fragmentierten Texturen durch jeden der gefüllten rechteckigen Rahmen zu bilden, wobei
ein Wert der ersten voreingestellten Spezifikation größer als oder gleich einer Summe aus einem Wert der zweiten voreingestellten Spezifikation und einem Wert der doppelten voreingestellten Breite ist.

2. Spiel-Rendering-Verfahren nach Anspruch 1, wobei das Füllen korrespondierender rechteckiger Rahmen mit der Mehrzahl von Stücken von fragmentierten Texturdaten und Randoriginaltexturdaten der voreingestellten Breite der Mehrzahl von Stücken von fragmentierten Texturdaten, um eine der fragmentierten Texturen durch jeden der gefüllten rechteckigen Rahmen zu bilden, umfasst:
Reservieren eines Randes der voreingestellten Breite auf jeder von einer oberen Seite und einer unteren Seite von jedem der rechteckigen Rahmen, und Hinzufügen des Randes der voreingestellten Breite auf jeder von einer linken Seite und einer rechten Seite des rechteckigen Rahmens, so dass der rechteckige Rahmen einen zentralen Bereich und einen Randbereich, der den zentralen Bereich umgibt, aufweist; und
Füllen von zentralen Bereichen der korrespondierenden rechteckigen Rahmen jeweils mit der Mehrzahl von Stücken von fragmentierten Texturdaten und Füllen von Randbereichen der korrespondierenden rechteckigen Rahmen jeweils mit den Randoriginaltexturdaten der voreingestellten Breite, die die Mehrzahl von Stücken von fragmentierten Texturdaten umgeben, um eine der fragmentierten Texturen durch jeden der gefüllten rechteckigen Rahmen zu bilden.

3. Spiel-Rendering-Verfahren nach Anspruch 1, wobei das Einkapseln (S203), für jede der Textur-Maps, der fragmentierten Texturen, die zu der Textur-Map korrespondieren, in die Ressourcendatei umfasst:
Erhalten, für jede der Textur-Maps, eines Attributs der Textur-Map, wobei das Attribut eine ID, einen Freigabetyp und Offset-Informationen umfasst, wobei der Freigabetyp eine sofortige Freigabe, eine automatische Freigabe umfasst oder in einem Speicher resident ist;
Erzeugen einer Kurzinformationstabelle basierend auf Attributen der Textur-Maps; und
Speichern der Kurzinformationstabelle in einem Datei-Header der Ressourcendatei, und Speichern der fragmentierten Texturen, die zu jeder der Textur-Maps korrespondieren, in einem Dateikörper der Ressourcendatei.

4. Spiel-Rendering-Verfahren nach einem der Ansprüche 1 bis 3, wobei das Zusammenfügen und Rendern (S104) der fragmentierten Texturen, die zu der Ziel-Textur-Map korrespondieren, umfasst:
Zerschneiden eines voreingestellten dynamischen Ladebereichs in einem Speicher in Zeilen in eine Mehrzahl von dynamischen Ladezeilen gemäß einer ersten voreingestellten Spezifikation;
Zuordnen, für jede der dynamischen Ladezeilen, eines freien Bereichs der dynamischen Ladezeile unter Verwendung eines Bin-Packing-Algorithmus;
Laden der fragmentierten Texturen, die zu der Ziel-Textur-Map korrespondieren, der Reihe nach in freie Bereiche der dynamischen Ladezeilen; und
Lesen der geladenen fragmentierten Texturen aus den dynamischen Ladezeilen und Übermitteln der gelesenen fragmentierten Texturen an eine Rendering-Engine des Spiels, um gerendert zu werden.

5. Spiel-Rendering-Verfahren nach Anspruch 3, wobei nach dem Zusammenfügen und Rendern (S104) der fragmentierten Texturen, die zu der Ziel-Textur-Map korrespondieren, das Verfahren des Weiteren umfasst:
Erhalten eines Freigabetyps der Ziel-Textur-Map aus dem Datei-Header der Ressourcendatei;
Freigeben der dynamischen Ladezeilen, die von den fragmentierten Texturen der Ziel-Textur-Map belegt sind, gemäß dem erhaltenen Freigabetyp; und
Zusammenfügen der zurückgewonnenen dynamischen Ladezeilen.

6. Verfahren zum Erzeugen einer Spielressourcendatei, umfassend:
Erhalten (S201) einer oder mehrerer Textur-Maps, die für das Rendern eines Spiels erforderlich sind, wobei die Textur-Maps jeweils Originaltexturdaten umfassen;
Fragmentieren (S202) jeder der Textur-Maps in eine Mehrzahl von fragmentierten Texturen; und
Einkapseln (S203) der fragmentierten Texturen, die zu der Textur-Map korrespondieren, in die Ressourcendatei des Spiels;
wobei das Fragmentieren (S202) jeder der Textur-Maps in eine Mehrzahl von fragmentierten Texturen umfasst:
Auswählen jeder der Textur-Maps der Reihe nach, und Schneiden der ausgewählten Textur-Map in Zeilen in eine Mehrzahl von rechteckigen Rahmen gemäß einer ersten voreingestellten Spezifikation;
Fragmentieren von Originaltexturdaten, die in der ausgewählten Textur-Map enthalten sind, in eine Mehrzahl von Stücken von fragmentierten Texturdaten gemäß einer zweiten voreingestellten Spezifikation, und Erhalten von Randoriginaltexturdaten einer voreingestellten Breite um jedes der Stücke von fragmentierten Texturdaten herum; und
Füllen von korrespondierenden rechteckigen Rahmen mit der Mehrzahl von Stücken von fragmentierten Texturdaten und Randoriginaltexturdaten der voreingestellten Breite der Mehrzahl von Stücken von fragmentierten Texturdaten, um eine der fragmentierten Texturen durch jeden der gefüllten rechteckigen Rahmen zu bilden, wobei ein Wert der ersten voreingestellten Spezifikation größer als oder gleich einer Summe aus einem Wert der zweiten voreingestellten Spezifikation und einem Wert der doppelten voreingestellten Breite ist.

7. Spiel-Rendering-Vorrichtung, umfassend:
eine Dateierhaltungseinheit (101), die konfiguriert ist, um eine Ressourcendatei eines Spiels zu erhalten, wobei die Ressourcendatei eine oder mehrere Textur-Maps umfasst, die für das Rendern des Spiels erforderlich sind, wobei jede der Textur-Maps durch Zusammenfügen einer Mehrzahl von fragmentierten Texturen gebildet wird;
eine Zielbestimmungseinheit (102), die konfiguriert ist, um eine Ziel-Textur-Map zu bestimmen, die von einem zu rendernden Netz in einer aktuell laufenden Szene des Spiels verwendet wird;
eine Sucheinheit (103), die konfiguriert ist, um die Ressourcendatei nach fragmentierten Texturen zu durchsuchen, die zu der Ziel-Textur-Map korrespondieren;
eine Zusammenfügungs-und-Rendering-Einheit (104), die konfiguriert ist, um die fragmentierten Texturen, die zu der Ziel-Textur-Map korrespondieren, zusammenzufügen und zu rendern; und
eine Ressourcenverpackungs-Verarbeitungseinheit (105), die konfiguriert ist, um: die eine oder mehreren Textur-Maps zu erhalten, die für das Rendern des Spiels erforderlich sind, wobei die Textur-Maps jeweils Originaltexturdaten umfassen; jede der Textur-Maps in eine Mehrzahl von fragmentierten Texturen zu fragmentieren, wobei jede der fragmentierten Texturen ein Stück fragmentierter Texturdaten und Randoriginaltexturdaten einer voreingestellten Breite, die die fragmentierten Texturdaten umgeben, umfasst; und die Mehrzahl der fragmentierten Texturen, die zu der Textur-Map korrespondieren, in die Ressourcendatei einzukapseln;
wobei die Ressourcenpackungs-Verarbeitungseinheit (105) konfiguriert ist, um: jede der Textur-Maps der Reihe nach auszuwählen und die ausgewählte Textur-Map in Zeilen in eine Mehrzahl von rechteckigen Rahmen gemäß einer ersten voreingestellten Spezifikation zu schneiden; Originaltexturdaten, die in der ausgewählten Textur-Map enthalten sind, in eine Mehrzahl von Stücken von fragmentierten Texturdaten gemäß einer zweiten voreingestellten Spezifikation zu fragmentieren, und Randoriginaltexturdaten einer voreingestellten Breite um jedes der Stücke von fragmentierten Texturdaten herum zu erhalten; und korrespondierende rechteckige Rahmen mit der Mehrzahl von Stücken von fragmentierten Texturdaten und Randoriginaltexturdaten der voreingestellten Breite der Mehrzahl von Stücken von fragmentierten Texturdaten zu füllen, um eine der fragmentierten Texturen durch jeden der gefüllten rechteckigen Rahmen zu bilden, wobei ein Wert der ersten voreingestellten Spezifikation größer als oder gleich einer Summe eines Wertes der zweiten voreingestellten Spezifikation und eines Wertes der doppelten voreingestellten Breite ist.

8. Spiel-Rendering-Vorrichtung nach Anspruch 7, des Weiteren umfassend:
eine Zurückgewinnungs-Verarbeitungseinheit (106), die konfiguriert ist, um: einen Freigabetyp der Ziel-Textur-Map aus einem Datei-Header der Ressourcendatei zu erhalten; dynamische Ladezeilen, die von den fragmentierten Texturen der Ziel-Textur-Map belegt sind, gemäß dem erhaltenen Freigabetyp freizugeben; und die zurückgewonnenen dynamischen Ladezeilen zusammenzufügen.

9. Spiel-Rendering-Vorrichtung nach Anspruch 8, wobei
die Ressourcenpackungs-Verarbeitungseinheit (105) konfiguriert ist, um korrespondierende rechteckige Rahmen mit der Mehrzahl von Stücken von fragmentierten Texturdaten und den Randoriginaltexturdaten der voreingestellten Breite der Mehrzahl von Stücken von fragmentierten Texturdaten zu füllen, um eine der fragmentierten Texturen durch jeden der gefüllten rechteckigen Rahmen zu bilden, durch: Reservieren eines Randes der voreingestellten Breite auf jeder von einer oberen Seite und einer unteren Seite von jedem der rechteckigen Rahmen, und Hinzufügen des Randes der voreingestellten Breite auf jeder von einer linken Seite und einer rechten Seite des rechteckigen Rahmens, so dass der rechteckige Rahmen einen zentralen Bereich und einen Randbereich, der den zentralen Bereich umgibt, aufweist; und Füllen von zentralen Bereichen der korrespondierenden rechteckigen Rahmen jeweils mit der Mehrzahl von Stücken von fragmentierten Texturdaten und Füllen von Randbereichen der korrespondierenden rechteckigen Rahmen jeweils mit den Randoriginaltexturdaten der voreingestellten Breite, die die Mehrzahl von Stücken von fragmentierten Texturdaten umgeben, um eine der fragmentierten Texturen durch jeden der gefüllten rechteckigen Rahmen zu bilden; und
die Ressourcenpackungs-Verarbeitungseinheit (105) konfiguriert ist, um: für jede der Textur-Maps, ein Attribut der Textur-Map zu erhalten, wobei das Attribut eine ID, einen Freigabetyp und Offset-Informationen umfasst, wobei der Freigabetyp eine sofortige Freigabe, eine automatische Freigabe umfasst oder in einem Speicher resident ist; eine Kurzinformationstabelle basierend auf Attributen der Textur-Maps zu erzeugen; und die Kurzinformationstabelle in dem Datei-Header der Ressourcendatei zu speichern, und die fragmentierten Texturen, die zu jeder der Textur-Maps korrespondieren, in einem Dateikörper der Ressourcendatei zu speichern.

10. Spiel-Rendering-Vorrichtung nach Anspruch 8 oder 9, wobei die Zusammenfügungs- und Wiedergabeeinheit (104) konfiguriert ist, um: einen voreingestellten dynamischen Ladebereich in einem Speicher in Zeilen in eine Mehrzahl von dynamischen Ladezeilen gemäß einer ersten voreingestellten Spezifikation zu schneiden; für jede der dynamischen Ladezeilen einen freien Bereich der dynamischen Ladezeile unter Verwendung eines Bin-Packing-Algorithmus zuzuordnen; die fragmentierten Texturen, die zu der Ziel-Textur-Map korrespondieren, der Reihe nach in freie Bereiche der dynamischen Ladezeilen zu laden; und die geladenen fragmentierten Texturen aus den dynamischen Ladezeilen zu lesen und die gelesenen fragmentierten Texturen an eine Rendering-Engine des zu Spiels zu übermitteln, um gerendert zu werden.

11. Vorrichtung zur Erzeugung einer Spielressourcendatei, umfassend:
eine Map-Erhaltungseinheit, die konfiguriert ist, um eine oder mehrere Textur-Maps zu erhalten, die für das Rendern eines Spiels erforderlich sind, wobei die Textur-Maps jeweils Originaltexturdaten umfassen;
eine Fragmentierungseinheit, die konfiguriert ist, um jede der Textur-Maps in eine Mehrzahl von fragmentierten Texturen zu fragmentieren; und
eine Dateieinkapselungseinheit, die konfiguriert ist, um die fragmentierten Texturen, die zu der Textur-Map korrespondieren, in eine Ressourcendatei des Spiels einzukapseln,
wobei die Fragmentierungseinheit konfiguriert ist, um:
jede der Textur-Maps der Reihe nach auszuwählen und die ausgewählte Textur-Map in Zeilen in eine Mehrzahl von rechteckigen Rahmen gemäß einer ersten voreingestellten Spezifikation zu schneiden;
Fragmentieren von Originaltexturdaten, die in der ausgewählten Textur-Map enthalten sind, in eine Mehrzahl von Stücken von fragmentierten Texturdaten gemäß einer zweiten voreingestellten Spezifikation, und Erhalten von Randoriginaltexturdaten einer voreingestellten Breite um jedes der Stücke von fragmentierten Texturdaten herum; und
Füllen von korrespondierenden rechteckigen Rahmen mit der Mehrzahl von Stücken von fragmentierten Texturdaten und Randoriginaltexturdaten der voreingestellten Breite der Mehrzahl von Stücken von fragmentierten Texturdaten, um eine der fragmentierten Texturen durch jeden der gefüllten rechteckigen Rahmen zu bilden, wobei
ein Wert der ersten voreingestellten Spezifikation größer als oder gleich einer Summe aus einem Wert der zweiten voreingestellten Spezifikation und einem Wert der doppelten voreingestellten Breite ist.

12. Speichervorrichtung, die einen oder mehrere Befehle speichert, wobei der eine oder die mehreren Befehle von einem Prozessor geladen werden, um das Spiel-Rendering-Verfahren nach einem der Ansprüche 1 bis 5 oder das Verfahren zum Erzeugen einer Spielressourcendatei nach Anspruch 6 zu implementieren.

13. Endgerät, umfassend:
einen Prozessor, der konfiguriert ist, um einen oder mehrere Befehle auszuführen; und
eine Speichervorrichtung, die den einen oder die mehreren Befehle speichert, wobei der eine oder die mehreren Befehle durch den Prozessor geladen werden, um das Spiel-Rendering-Verfahren nach einem der Ansprüche 1 bis 5 oder Verfahren zum Erzeugen einer Spielressourcendatei nach Anspruch 6 zu implementieren.

## Revendications

1. Procédé de rendu de jeu, comprenant:
obtenir (S101) un fichier de ressources d'un jeu, le fichier de ressources comprenant une ou plusieurs cartes de texture requises par le rendu du jeu, chacune des cartes de texture étant formée en fusionnant une pluralité de textures fragmentées;
déterminer (S102) une carte de texture cible utilisée par un maillage à rendre dans une scène en cours d'exécution du jeu;
rechercher (S103) dans le fichier de ressources des textures fragmentées correspondant à la carte de texture cible; et
fusionner et rendre (S104) les textures fragmentées correspondant à la carte de texture cible;
dans lequel avant l'obtention (S101) d'un fichier de ressources d'un jeu, le procédé comprend en outre:
obtenir (S201) une ou plusieurs cartes de texture requises par le rendu du jeu, les cartes de texture comprenant chacune des données de texture originales;
fragmenter (S202) chacune des cartes de texture en une pluralité de textures fragmentées, chacune des textures fragmentées comprenant un morceau de données de texture fragmentées et de données de texture originales marginales d'une largeur prédéfinie entourant les données de texture fragmentées;
encapsuler (S203) les textures fragmentées correspondant à la carte de texture dans le fichier de ressources;
dans lequel la fragmentation (S202) de chacune des cartes de texture en une pluralité de textures fragmentées comprend:
sélectionner chacune des cartes de texture tour à tour, et découper la carte de texture sélectionnée en lignes en une pluralité de cadres rectangulaires selon une première spécification prédéfinie;
fragmenter des données de texture originales comprises dans la carte de texture sélectionnée en une pluralité de morceaux de données de texture fragmentées selon une deuxième spécification prédéfinie, et obtenir des données de texture originales marginales d'une largeur prédéfinie autour de chacun des morceaux de données de texture fragmentées; et
remplir des cadres rectangulaires correspondants de la pluralité de morceaux de données de texture fragmentées et de données de texture originales marginales de la largeur prédéfinie de la pluralité de morceaux de données de texture fragmentées, afin de former l'une des textures fragmentées par chacun des cadres rectangulaires remplis, dans lequel
une valeur de la première spécification prédéfinie est supérieure ou égale à une somme d'une valeur de la deuxième spécification prédéfinie et d'une valeur de deux fois la largeur prédéfinie.

2. Procédé de rendu de jeu selon la revendication 1, dans lequel le remplissage de cadres rectangulaires correspondants de la pluralité de morceaux de données de texture fragmentées et de données de texture originales marginales de la largeur prédéfinie de la pluralité de morceaux de données de texture fragmentées, pour former l'une des textures fragmentées par chacun des cadres rectangulaires remplis comprend:
réserver une marge de la largeur prédéfinie sur chacun d'un côté supérieur et d'un côté inférieur de chacun des cadres rectangulaires, et ajouter la marge de la largeur prédéfinie sur chacun d'un côté gauche et d'un côté droit du cadre rectangulaire, de sorte que le cadre rectangulaire présente une région centrale et une région marginale entourant la région centrale; et
remplir des régions centrales des cadres rectangulaires correspondants respectivement de la pluralité de morceaux de données de texture fragmentées, et remplir des régions marginales des cadres rectangulaires correspondants respectivement des données de texture originales marginales de la largeur prédéfinie entourant la pluralité de morceaux de données de texture fragmentées, pour former l'une des textures fragmentées par chacun des cadres rectangulaires remplis.

3. Procédé de rendu de jeu selon la revendication 1, dans lequel l'encapsulation (S203), pour chacune des cartes de texture, des textures fragmentées correspondant à la carte de texture dans le fichier de ressources comprend:
obtenir, pour chacune des cartes de texture, un attribut de la carte de texture, l'attribut comprenant un identifiant, un type de libération et des informations de décalage, le type de libération comprenant une libération immédiate, une libération automatique ou étant résident dans une mémoire;
générer une brève table d'informations sur la base d'attributs des cartes de texture; et
stocker la brève table d'informations dans un en-tête de fichier du fichier de ressources, et stocker les textures fragmentées correspondant à chacune des cartes de texture dans un corps de fichier du fichier de ressources.

4. Procédé de rendu de jeu selon l'une quelconque des revendications 1 à 3, dans lequel la fusion et le rendu (S104) des textures fragmentées correspondant à la carte de texture cible comprend:
découper une région de chargement dynamique prédéfinie dans une mémoire en lignes en une pluralité de lignes de chargement dynamique selon une première spécification prédéfinie;
allouer, pour chacune des lignes de chargement dynamique, une région libre de la ligne de chargement dynamique en utilisant un algorithme de bin-packing
charger les textures fragmentées correspondant à la carte de texture cible tour à tour dans des régions libres des lignes de chargement dynamique; et
lire les textures fragmentées chargées à partir des lignes de chargement dynamique et soumettre les textures fragmentées lues à un moteur de rendu du jeu pour être rendues.

5. Procédé de rendu de jeu selon la revendication 3, dans lequel, après la fusion et le rendu (S104) des textures fragmentées correspondant à la carte de texture cible, le procédé comprend en outre:
obtenir un type de libération de la carte de texture cible à partir de l'en-tête de fichier du fichier de ressources;
libérer les lignes de chargement dynamique occupées par les textures fragmentées de la carte de texture cible selon le type de libération obtenu; et
fusionner les lignes de chargement dynamique recyclées.

6. Procédé de génération de fichier de ressource de jeu, comprenant:
obtenir (S201) une ou plusieurs cartes de texture requises par le rendu d'un jeu, les cartes de texture comprenant chacune des données de texture originales;
fragmenter (S202) chacune des cartes de texture en une pluralité de textures fragmentées; et
encapsuler (S203) les textures fragmentées correspondant à la carte de texture dans le fichier de ressources du jeu;
dans lequel la fragmentation (S202) de chacune des cartes de texture en une pluralité de textures fragmentées comprend:
sélectionner chacune des cartes de texture tour à tour, et découper la carte de texture sélectionnée en lignes en une pluralité de cadres rectangulaires selon une première spécification prédéfinie;
fragmenter des données de texture originales comprises dans la carte de texture sélectionnée en une pluralité de morceaux de données de texture fragmentées selon une deuxième spécification prédéfinie, et obtenir des données de texture originales marginales d'une largeur prédéfinie autour de chacun des morceaux de données de texture fragmentées; et
remplir des cadres rectangulaires correspondants de la pluralité de morceaux de données de texture fragmentées et de données de texture originales marginales de la largeur prédéfinie de la pluralité de morceaux de données de texture fragmentées, pour former l'une des textures fragmentées par chacun des cadres rectangulaires remplis, dans lequel une valeur de la première spécification prédéfinie est supérieure ou égale à une somme d'une valeur de la deuxième spécification prédéfinie et d'une valeur de deux fois la largeur prédéfinie.

7. Dispositif de rendu de jeu, comprenant:
une unité d'obtention de fichier (101) configurée pour obtenir un fichier de ressources d'un jeu, le fichier de ressources comprenant une ou plusieurs cartes de texture requises par le rendu du jeu, chacune des cartes de texture étant formée en fusionnant une pluralité de textures fragmentées;
une unité de détermination de cible (102) configurée pour déterminer une carte de texture cible utilisée par un maillage à rendre dans une scène en cours d'exécution du jeu;
une unité de recherche (103) configurée pour rechercher dans le fichier de ressources des textures fragmentées correspondant à la carte de texture cible;
une unité de fusion et de rendu (104) configurée pour fusionner et rendre les textures fragmentées correspondant à la carte de texture cible; et
une unité de traitement de conditionnement de ressources (105) configurée pour: obtenir ladite une ou lesdites plusieurs cartes de texture requises par le rendu du jeu, les cartes de texture comprenant chacune des données de texture originales; fragmenter chacune des cartes de texture en une pluralité de textures fragmentées, chacune des textures fragmentées comprenant un morceau de données de texture fragmentées et de données de texture originales marginales d'une largeur prédéfinie entourant les données de texture fragmentées; et encapsuler la pluralité de textures fragmentées correspondant à la carte de texture dans le fichier de ressources;
dans lequel l'unité de traitement de conditionnement de ressources (105) est configurée pour: sélectionner chacune des cartes de texture tour à tour, et découper la carte de texture sélectionnée en lignes en une pluralité de cadres rectangulaires selon une première spécification prédéfinie; fragmenter des données de texture originales comprises dans la carte de texture sélectionnée en une pluralité de morceaux de données de texture fragmentées selon une deuxième spécification prédéfinie, et obtenir des données de texture originales marginales d'une largeur prédéfinie autour de chacun des morceaux de données de texture fragmentées; et remplir des cadres rectangulaires correspondants de la pluralité de morceaux de données de texture fragmentées et de données de texture originales marginales de la largeur prédéfinie de la pluralité de morceaux de données de texture fragmentées, pour former l'une des textures fragmentées par chacun des cadres rectangulaires remplis, dans lequel une valeur de la première spécification prédéfinie est supérieure ou égale à une somme d'une valeur de la deuxième spécification prédéfinie et d'une valeur de deux fois la largeur prédéfinie.

8. Dispositif de rendu de jeu selon la revendication 7, comprenant en outre:
une unité de traitement de recyclage (106) configurée pour: obtenir un type de libération de la carte de texture cible à partir d'un en-tête de fichier du fichier de ressources; libérer des lignes de chargement dynamique occupées par les textures fragmentées de la carte de texture cible selon le type de libération obtenu; et fusionner les lignes de chargement dynamique recyclées.

9. Dispositif de rendu de jeu selon la revendication 8, dans lequel
l'unité de traitement de conditionnement de ressources (105) est configurée pour remplir des cadres rectangulaires correspondants de la pluralité de morceaux de données de texture fragmentées et des données de texture originales marginales de la largeur prédéfinie de la pluralité de morceaux de données de texture fragmentées, pour former l'une des textures fragmentées par chacun des cadres rectangulaires remplis en: réservant une marge de la largeur prédéfinie sur chacun d'un côté supérieur et d'un côté inférieur de chacun des cadres rectangulaires, et en ajoutant la marge de la largeur prédéfinie sur chacun d'un côté gauche et d'un côté droit du cadre rectangulaire, de sorte que le cadre rectangulaire présente une région centrale et une région marginale entourant la région centrale; et en remplissant des régions centrales des cadres rectangulaires correspondants respectivement de la pluralité de morceaux de données de texture fragmentées, et en remplissant des régions marginales des cadres rectangulaires correspondants respectivement des données de texture originales marginales de la largeur prédéfinie entourant la pluralité de morceaux de données de texture fragmentées, pour former l'une des textures fragmentées par chacun des cadres rectangulaires remplis; et
l'unité de traitement de conditionnement de ressources (105) est configurée pour: obtenir, pour chacune des cartes de texture, un attribut de la carte de texture, l'attribut comprenant un identifiant, un type de libération et des informations de décalage, le type de libération comprenant une libération immédiate, une libération automatique ou étant résidant dans une mémoire; générer une brève table d'informations sur la base d'attributs des cartes de texture; et stocker la brève table d'informations dans l'en-tête de fichier du fichier de ressources, et stocker les textures fragmentées correspondant à chacune des cartes de texture dans un corps de fichier du fichier de ressources.

10. Dispositif de rendu de jeu selon la revendication 8 ou 9, dans lequel l'unité de fusion et de rendu (104) est configurée pour: découper une région de chargement dynamique prédéfinie dans une mémoire en lignes en une pluralité de lignes de chargement dynamique selon une première spécification prédéfinie; allouer, pour chacune des lignes de chargement dynamique, une région libre de la ligne de chargement dynamique en utilisant un algorithme de bin-packing; charger les textures fragmentées correspondant à la carte de texture cible tour à tour dans des régions libres des lignes de chargement dynamique; et lire les textures fragmentées chargées à partir des lignes de chargement dynamique et soumettre les textures fragmentées lues à un moteur de rendu du jeu pour être rendues.

11. Dispositif de génération de fichier de ressource de jeu, comprenant:
une unité d'obtention de carte configurée pour obtenir une ou plusieurs cartes de texture requises par le rendu d'un jeu, les cartes de texture comprenant chacune des données de texture originales;
une unité de fragmentation configurée pour fragmenter chacune des cartes de texture en une pluralité de textures fragmentées; et
une unité d'encapsulation de fichier configurée pour encapsuler les textures fragmentées correspondant à la carte de texture dans le fichier de ressources du jeu;
dans lequel l'unité de fragmentation est configurée pour:
sélectionner chacune des cartes de texture tour à tour, et découper la carte de texture sélectionnée en lignes en une pluralité de cadres rectangulaires selon une première spécification prédéfinie;
fragmenter des données de texture originales comprises dans la carte de texture sélectionnée en une pluralité de morceaux de données de texture fragmentées selon une deuxième spécification prédéfinie, et obtenir des données de texture originales marginales d'une largeur prédéfinie autour de chacun des morceaux de données de texture fragmentées; et
remplir des cadres rectangulaires correspondants de la pluralité de morceaux de données de texture fragmentées et de données de texture originales marginales de la largeur prédéfinie de la pluralité de morceaux de données de texture fragmentées, pour former l'une des textures fragmentées par chacun des cadres rectangulaires remplis, dans lequel
une valeur de la première spécification prédéfinie est supérieure ou égale à une somme d'une valeur de la deuxième spécification prédéfinie et d'une valeur de deux fois la largeur prédéfinie.

12. Dispositif de stockage stockant une ou plusieurs instructions, dans lequel ladite une ou lesdites plusieurs instructions sont chargées par un processeur pour mettre en œuvre le procédé de rendu de jeu selon l'une quelconque des revendications 1 à 5, ou le procédé de génération de fichier de ressource de jeu selon la revendication 6.

13. Terminal comprenant:
un processeur configuré pour exécuter une ou plusieurs instructions; et
un dispositif de stockage stockant ladite une ou lesdites plusieurs instructions, dans lequel ladite une ou lesdites plusieurs instructions sont chargées par le processeur pour mettre en œuvre le procédé de rendu de jeu selon l'une quelconque des revendications 1 à 5, ou le procédé de génération de fichier de ressource de jeu selon la revendication 6.
